# EUROPÄISCHE PATENTANMELDUNG

(11) **EP 4 282 787 A1**
(43) Veröffentlichungstag der Anmeldung: **29.11.2023**
(21) Anmeldenummer: 23172301.6
(22) Anmeldetag: 09.05.2023
(51) Int. Cl.: B65G 1/04, B65G 1/137

(54) **FÖRDERVERFAHREN UND FÖRDERVORRICHTUNG FÜR WAREN**

(30) Priorität: 24.05.2022 DE 102022205211
(71) Anmelder: Dürkopp Fördertechnik GmbH, 33719 Bielefeld (DE)
(72) Erfinder: Sieksmeier, Dirk, 32139 Spenge (DE); Kleinekathöfer, Axel, 33649 Bielefeld (DE); Meier, Dirk, 32756 Detmold (DE); Rehm, Pascal, 33617 Bielefeld (DE)
(74) Vertreter: Rau, Schneck & Hübner Patentanwälte Rechtsanwälte PartGmbB

(57) **Zusammenfassung**

Ein Förderverfahren für Waren umfasst die Verfahrensschritte Anfordern eines Auftrags von einer Warensenke (7), wobei der Auftrag mindestens eine Ware umfasst, die eine Auftragsware darstellt, Anfordern der mindestens einen Auftragsware aus einem ersten Umlaufförderer (3), an den die Warensenke (7) fördertechnisch unmittelbar angeschlossen ist, Anfordern und automatisches Übergeben der mindestens einen Auftragsware aus einem dem ersten Umlaufförderer (3) vorgeschalteten Konsolidierungsspeicher (2), der eine umlaufende Förderstrecke aufweist, in den ersten Umlaufförderer (3), sowie Fördern und Abgeben der mindestens einen angeforderten Auftragsware an die Warensenke (7).

## Beschreibung

Der Inhalt der deutschen Patentanmeldung DE 10 2022 205 211.0 wird durch Bezugnahme hierin aufgenommen.

Die Erfindung betrifft ein Förderverfahren und eine Fördervorrichtung für Waren.

Bei der Abarbeitung von Kundenaufträgen in einer Förderanlage werden Einzelwaren aus einem Warenlager gefördert, zu Aufträgen zusammengestellt, insbesondere sortiert, zu einem Warenausgang transportiert und versendet. Die Sortierung kann mittels eines sogenannten Matrixsorters erfolgen, mit dem eine Zusammenstellung von Aufträgen durch eine Sequenzierung der einzelnen Waren erreicht wird. Ein Matrixsorter ist ein Sorter mit mehreren Sortierstufen, die in Warenförderrichtung hintereinander angeordnet sind. Jede Sortierstufe hat mehrere Sortierbahnen, wobei die Zuführung und die Abführung der Waren in bzw. aus den Sortierstufen in jede Sortierbahn möglich ist. Insbesondere erfolgt die Sortierung dadurch, dass für jede Sortierstufe unterschiedliche Sortierkriterien angewendet werden. Mit dem Matrixsorter werden nicht nur die Waren bezüglich ihrer Zusammengehörigkeit in Aufträgen, sondern auch die Reihenfolge der Waren innerhalb eines Auftrags festgelegt. Die Reihenfolge der Waren innerhalb eines Auftrags ist insbesondere im Versandhandel unerheblich. Die diesbezüglichen Prozessschritte und ein Warenpuffer des Matrixsorters sind nicht erforderlich.

Alternativ kann die Sortierung mittels eines Kammsorters erfolgen, bei dem ausgehend von einer Zuführbahn die Waren gezielt in Sortierlinien zugeführt werden. Die Anzahl gleichzeitig zu bearbeitender Aufträge entspricht der Anzahl an Warensenken, also Packplätzen. Nachteilig ist, dass für einen hohen Warendurchsatz eine große Anzahl an Warensenken erforderlich ist. Der Investitionsbedarf und der Platzbedarf einer derartigen Förderanlage sind groß.

Es ist die Aufgabe der vorliegenden Erfindung, das, insbesondere auftragsorientierte, Fördern von Waren zu Warensenken zu vereinfachen, insbesondere die Anzahl der Verfahrensschritte und/oder die Durchlaufzeit der Waren in einer Fördervorrichtung zu reduzieren und insbesondere die Anzahl erforderlicher Warensenken zu reduzieren.

Diese Aufgabe ist erfindungsgemäß gelöst durch ein Förderverfahren mit den im Anspruch 1 angegebenen Merkmalen sowie durch eine Fördervorrichtung mit den im Anspruch 12 angegebenen Merkmalen.

Der Kern der Erfindung besteht darin, dass Waren von mindestens einer Warensenke aus einen vorgelagerten Förderstufe angefordert, also gezogen, werden. Die Erfindung betrifft insbesondere eine mehrstufige und insbesondere pullbasierte Sortierung der Waren, insbesondere für verschiedene Aufträge. Die mindestens eine Warensenke ist insbesondere ein Packplatz. Der Packplatz ist insbesondere mit einem Warenausgang fördertechnisch verbunden. Damit unterscheidet sich die erfindungsgemäße Idee von Verfahren gemäß dem Stand der Technik, bei welchen die Waren von einem Warenlager zu den Warensenken geschoben werden.

Es wurde insbesondere erkannt, dass weder die Reihenfolge der Waren innerhalb eines Auftrags, eine sogenannte Sequenz, noch die zusammenhängende Förderung von Waren eines Auftrags in der Fördervorrichtung, eine sogenannte Kohäsion, erforderlich sind. Die Kohäsion kann erfindungsgemäß in einem möglichst späten und insbesondere letzten Verfahrensschritt erfolgen, wenn die Waren aus dem ersten Umlaufförderer an die Warensenke abgegeben werden. In allen vorherigen Verfahrensschritten ist die Kohäsion nicht erforderlich. Dadurch wird die Flexibilität bei der Förderung der Waren erhöht. Das Förderverfahren wird dadurch vereinfacht.

Darüber hinaus wurde erkannt, dass eine geringe Auftragsdurchlaufzeit bei einer hohen Warenleistung, also einem hohen Warendurchsatz ermöglicht wird. Die Erfindung verknüpft insbesondere die jeweiligen Vorteile eines Matrixsorters mit denen eines Kammsorters, ohne deren inhärenten Nachteile zu übernehmen.

Eine weitere Erkenntnis der Erfindung beruht darauf, dass ein Sortieren der Waren zumindest in einem Konsolidierungsspeicher erfolgt, der eine umlaufende Förderstrecke aufweist. Das bedeutet, dass die Waren in dem Konsolidierungsspeicher umlaufend gefördert und durch gezieltes Einschleusen in den Konsolidierungsspeicher und/oder gezieltes Ausschleusen aus dem Konsolidierungsspeicher sortiert werden können. Der Konsolidierungsspeicher bildet insbesondere eine erste Förderstufe. Dem Konsolidierungsspeicher vorgelagert ist insbesondere mindestens ein Beladeplatz, an dem einzelne Waren einem Förderbehältnis aufgegeben werden. Der Konsolidierungsspeicher ist ein Warenspeicher und insbesondere ein Warenlager, in dem die einzelnen Waren dynamisch umlaufend gespeichert sind.

Da sowohl der erste Umlaufförderer als auch der Konsolidierungsspeicher, also insbesondere die erste und die letzte Förderstufe, jeweils als umlaufende Förderer ausgeführt sind, die jeweils umlaufend fördernde Speicher, insbesondere mit wahlfreiem Zugriff auf jede Auftragsware bilden, kann in diesen Förderstufen die Bearbeitungsreihenfolge der Waren geändert werden, indem Waren verschiedener Aufträge sich gegenseitig bei dem Übergeben von der einen in die nachfolgende Förderstufe überholen können.

Insbesondere wird mit jedem Förderbehältnis genau eine Ware gefördert. Ein Förderbehältnis ist insbesondere eine Fördertasche, die insbesondere hängend in der Fördervorrichtung transportiert wird. Die Fördervorrichtung ist insbesondere ein Hängeförderer. Eine derartige Fördertasche ist beispielsweise bekannt aus DE 10 2018 201 675 A1 oder aus DE 10 2018 201 676 A1. Alternativ kann das Förderbehältnis auch ein Liegewarenbehälter sein, insbesondere eine Kiste oder ein Karton. In diesem Fall ist die Fördervorrichtung ein Liegeförderer, insbesondere ein Gurtförderer oder Bandförderer.

Die Waren werden von der mindestens einen Warensenke zunächst aus einem ersten Umlaufförderer angefordert, der dem Konsolidierungsspeicher in Warenförderrichtung nachgeschaltet ist. Der erste Umlaufförderer bildet eine nachgelagerte, insbesondere letzte, Förderstufe. Die mindestens eine Warensenke ist insbesondere unmittelbar an den Umlaufförderer fördertechnisch angeschlossen. Mit dem ersten Umlaufförderer werden die aus dem Konsolidierungsspeicher angeforderten Waren gefördert und, insbesondere auftragsorientiert, an die jeweilige Warensenke abgegeben. Das Übergeben der Waren aus dem Konsolidierungsspeicher in den ersten Umlaufförderer erfolgt automatisch. Ein derartiges Verfahren ist effizient. Menschliche und/oder manuelle Interaktionen sind entbehrlich.

Es wurde gefunden, dass in einem mehrstufigen Förderverfahren eine Umlagerung der Waren von einer vorgelagerten Förderstufe in eine nachgelagerte Förderstufe besonders vorteilhaft erfolgt, wenn die Umlagerung durch die jeweils nachgelagerte Förderstufe ausgelöst wird. Durch die nachgelagerte Förderstufe wird ein Bedarf an Waren definiert und generiert. Ausgehend von diesem Warenbedarf werden die hierfür erforderlichen Waren aus der vorgelagerten Förderstufe angefordert. Die jeweilige Anforderung der Waren erfolgt insbesondere von einer Förderstufe auf die jeweils vorgelagerte Förderstufe und insbesondere mehrfach bis zurück zu einem Warenspeicher oder Warenlager. Insbesondere können ein Überfüllen einer Förderstufe und ein daraus resultierender Rückstau im Warenstrom vermieden werden.

Insbesondere wurde erkannt, dass es vorteilhaft ist, wenn der mindestens einen Warensenke genau ein Auftrag zugeordnet wird. Dieser zugeordnete Auftrag impliziert einen Bedarf an Waren, insbesondere Auftragswaren, wobei diese Auftragswaren von der Warensenke aus dem ersten Umlaufförderer angefordert werden. Die Anforderung von der Warensenke an den ersten Umlaufförderer generiert den Warenbedarf in dem ersten Umlaufförderer. Entsprechend wird von dem ersten Umlaufförderer dieser Warenbedarf an den Konsolidierungsspeicher weitergegeben. Das Förderverfahren ist pullbasiert. Die Waren werden durch die verschiedenen Förderstufen von der Warensenke aus gezogen.

Ein derartiges Verfahren kann schnell und effizient durchgeführt werden. Bei einer entsprechenden Fördervorrichtung können Anzahl und Platzbedarf für Pufferspeicher und/oder für Warensenken, also Packplätze, reduziert werden. Die Investitionskosten sind reduziert. Der Flächenbedarf ist reduziert.

Eine weitere Erkenntnis beruht darauf, dass der Konsolidierungsspeicher eine Entkopplung zwischen einem Beladeprozess an einem Beladeplatz und einem Packprozess an einem Packplatz ermöglicht. Der Beladeprozess bedeutet, dass die mit den Einzelwaren beladenen Förderbehältnisse in den Konsolidierungsspeicher gefördert, also geschoben, werden. Der Beladeprozess ist ein sogenannter Pushprozess. Das Packen der Waren an den Packplätzen, also an den Warensenken, erfolgt pullbasiert. Der Konsolidierungsspeicher ermöglicht das logistische und fördertechnische Entkoppeln des pushbasierten Beladens und des pullbasierten Packens. Durch das Entkoppeln ist ein effizienter Betrieb, insbesondere Batch-Betrieb, einer Lagerstufe möglich, die insbesondere den Beladeplätzen vorgelagert ist. Die Lagerstufe umfasst insbesondere ein shuttlebasiertes und/oder ein manuelles Kommissionierlager.

Insbesondere wurde gefunden, dass die Warenaufnahmekapazität der verschiedenen Förderstufen mit Zunahme des Förderstufengrades abnimmt. Das bedeutet, dass eine Förderstufe höherer Ordnung eine geringere Warenaufnahmekapazität aufweist. Entsprechend ist die Umschlagzeit der verschiedenen Förderstufen unterschiedlich und nimmt bei nachgelagerten Förderstufen ab. Insbesondere weist der erste Umlaufförderer eine Warenaufnahmekapazität von etwa 150 bis 300 Stück und insbesondere von 180 bis 250 Stück auf. Der Konsolidierungsspeicher weist eine Warenaufnahmekapazität von mindestens 1000 Stück, insbesondere mindestens 5000 Stück und insbesondere bis zu 10000 Stück oder mehr auf.

Der erste Umlaufförderer ist endlos umlaufend, also fördertechnisch geschlossen, ausgeführt. Es ist vorteilhaft, wenn der erste Umlaufförderer einen ersten Förderstrang und einen zweiten Förderstrang aufweist, wobei nur der erste Förderstrang eine feste Förderbehältnis-Mitnahme aufweist. Der zweite Förderstrang weist keine feste Förderbehältnis-Mitnahme auf. Der zweite Förderstrang hat eine Pufferfunktion. Der zweite Förderstrang dient insbesondere zur Rezirkulation der Waren und insbesondere als Bypass-Strecke in dem ersten Umlaufförderer bezüglich des ersten Förderstrangs. Insbesondere wird der geschlossene erste Umlaufförderer durch den ersten Förderstrang und den zweiten Förderstrang gebildet. In diesem Fall weist der erste Umlaufförderer keine weiteren Förderstränge auf.

Es ist auch möglich, dass der erste Umlaufförderer mehr als zwei Förderstränge aufweist, wobei mehrere erste Förderstränge, also mit fester Förderbehältnis-Mitnahme und/oder mehrere zweite Förderstränge ohne feste Förderbehältnis-Mitnahme vorhanden sein können. Wesentlich ist, dass nur die ersten Förderstränge mit der festen Förderbehältnis-Mitnahme ausgeführt sind. Entsprechend können aber auch mehr als ein Förderstrang, nämlich mehrere erste Förderstränge, jeweils eine feste Förderbehältnis-Mitnahme aufweisen.

Es wurde gefunden, dass mit dem ersten Umlaufförderer und insbesondere mit dem zweiten Förderstrang ohne feste Förderbehältnis-Mitnahme eine Entkopplung der Förderbehältnisse und der Förderbehältnis-Mitnahme ermöglicht ist. Dadurch ist es insbesondere ermöglicht, die Förderbehältnisse in den Warenstrom des ersten Umlaufförderers mit einstellbarem Abstand einzutakten, also fördertechnisch in den ersten Umlaufförderer aufzugeben. Lücken im, insbesondere rückgeführten, Warenstrom, die insbesondere durch das Abgeben von Waren an den Warensenken entstehen, können durch das zumindest vorübergehende Aufstauen der Waren im zweiten Förderstrang und/oder durch das gezielte Eintakten der Waren von der mindestens einen Warenquelle geschlossen werden. Es gelingt, den Warenstrom nachzuverdichten.

Das Förderbehältnis und ein die Förderbehältnisse antreibender Förderantrieb in dem ersten Umlaufförderer sind zumindest abschnittsweise und/oder zumindest zeitweise entkoppelbar, also nicht fest miteinander verbunden. Diese Entkopplung erfolgt entlang des zweiten Förderstrangs.

Der erste Umlaufförderer selbst weist eine Pufferfunktion auf und ermöglicht insbesondere eine flexible Zuordnung der Waren im ersten Umlaufförderer an die Warensenken. Da der erste Umlaufförderer an mehrere Warensenken unmittelbar angeschlossen ist, ist eine starre Warenzuordnung an genau eine Warensenke entbehrlich. Das Verfahren ist flexibel durchführbar.

Das Verfahren eignet sich insbesondere für eine auftragslose Mengenverteilung und/oder eine auftragsgebundene Verteilung, die beispielsweise bei E-Commerce-Aufträgen genutzt wird. Bei der auftragsgebundenen Verteilung wird anstelle von Einzelwaren eine einen Auftrag bildende Warenmenge einer Warensenke zugeordnet. Ein Auftrag umfasst mindestens eine Ware und insbesondere mehrere Waren, wobei es sich insbesondere um verschiedene Waren, also um unterschiedliche Warentypen, handelt. Insbesondere weisen die Warensenken jeweils mehrere Warenplätze auf. Jeder Warenplatz bildet einen Puffer für mindestens eine Auftragsware.

Die in den Förderbehältnissen geförderten Waren sind eindeutig identifizierbar. Dazu weisen die Förderbehältnisse an sich bekannte Identifikationsmittel, insbesondere RFID-Chips und/oder maschinenlesbare Codes, insbesondere Strichcodes oder QR-Codes auf. Entlang einer Warenförderrichtung der Fördervorrichtung sind Lesegeräte angeordnet, die zum Lesen der Identifikationsmittel dienen. Die Förderbehältnisse mit den darin geförderten Waren sind in der Fördervorrichtung nachverfolgbar. Insbesondere kann die Position für jedes Förderbehältnis innerhalb der Fördervorrichtung bestimmt werden.

Bei dem erfindungsgemäßen Förderverfahren werden die Waren mehrstufig gefördert, nämlich von der ersten Förderstufe, dem Konsolidierungsspeicher, in mindestens eine nachfolgende Förderstufe. Das bedeutet, dass mindestens eine weitere Förderstufe, nämlich der erste Umlaufförderer, vorhanden ist. Zwischen dem Konsolidierungsspeicher und dem ersten Umlaufförderer können weitere Förderstufen, insbesondere weitere Umlaufförderer, angeordnet sein. Die einzelnen Förderstufen sind insbesondere mittels linearer Förderstrecken fördertechnisch miteinander verbunden. Die linearen Förderstrecken ermöglichen eine Förderung von einer Förderstufe niedrigerer Ordnung in eine Förderstufe der nächsthöheren Ordnung. Eine umgekehrte Förderrichtung, also von einer Förderstufe höherer Ordnung in eine Förderstufe niedrigerer Ordnung, ist insbesondere nicht vorgesehen. Innerhalb der jeweiligen Förderstufen werden die Waren insbesondere endlos umlaufend gefördert. Jede Förderstufe bildet einen Pufferspeicher. Innerhalb der Förderstufen findet keine Sortierung der Waren statt. Eine Sortierung der Waren erfolgt durch gezieltes Einschleusen und Ausschleusen in oder aus einer jeweiligen Förderstufe.

Ein Förderverfahren gemäß Anspruch 2 ermöglicht eine vorteilhafte Handhabung, insbesondere Förderung, der Waren. Insbesondere ist eine durchgängige Warenförderung möglich, insbesondere ein kontinuierlicher Warenstrom.

Ein Verfahren gemäß Anspruch 3 erhöht insbesondere die Effizienz bei der Automatisierung. Insbesondere ist es möglich, die Abgabe der Waren, also das Entladen und/oder Ausschleusen, bei konstanter Fördergeschwindigkeit durchzuführen. Es wurde erkannt, dass eine Reduktion der Fördergeschwindigkeit im ersten Umlaufförderer entbehrlich ist. Das Abgeben der Waren erfolgt insbesondere bei der Nenngeschwindigkeit des Förderantriebs. Das Verfahren ist insbesondere ein stetiges Förderverfahren. Das Verfahren ermöglicht eine erhöhte Effizienz, also eine erhöhte Förderrate.

Ein Verfahren gemäß Anspruch 4 ermöglicht eine erhöhte Flexibilität der Waren im Warenstrom, insbesondere bezüglich der Sortierung der Waren.

Ein in Warenförderrichtung zwischen dem Konsolidierungsspeicher und dem ersten Umlaufförderer angeordneter zweiter Umlaufförderer gemäß Anspruch 5 erhöht die Flexibilität bei der Warenbereitstellung. Der zweite Umlaufförderer weist eine Warenaufnahmekapazität von 200 Stück bis 1000 Stück, insbesondere von 300 Stück bis 800 Stück und insbesondere von 400 bis 600 Stück auf.

Ein Verfahren gemäß Anspruch 6 ermöglicht ein Konsolidieren von vollständigen Aufträgen in einer Förderstufe. Das Konsolidieren erfolgt insbesondere in jeder Förderstufe, insbesondere erstmalig im Konsolidierungsspeicher. Insbesondere erfolgt eine Weiterverarbeitung von Waren in einer Förderstufe erst nachdem ein Konsolidieren in der jeweils vorherigen Förderstufe stattgefunden hat. Die Sortierqualität ist erhöht, da, insbesondere ausschließlich, vollständige, also konsolidierte, Aufträge in die nächste Förderstufe weitergegeben werden. Eventuelle Fehler bei der Zuführung von Waren in eine nächste Förderstufe werden durch die Konsolidierung ausgeglichen. Eine fehlerhafte Zuführung kann insbesondere durch eine manuelle Kommissionierung erfolgen.

Ein Verfahren gemäß Anspruch 7 ermöglicht eine erhöhte Flexibilität im Sortierprozess.

Ein Verfahren gemäß Anspruch 8 gewährleistet eine zielgerichtete, insbesondere auftragsorientierte, Förderung der Waren.

Ein Verfahren gemäß Anspruch 9 gewährleistet eine verbesserte Sortierqualität.

Ein Verfahren gemäß Anspruch 10 ermöglicht ein sukzessives Befüllen des Konsolidierungsspeichers. Insbesondere ist ein Befüllen des Konsolidierungsspeichers ausgehend von mehreren Beladestationen möglich. Das Beladen kann unabhängig von der Auftragsabwicklung mit einem Pushprozess erfolgen, indem die beladenen Förderbehältnisse, insbesondere fördertechnisch unabhängig von dem pullbasierten Warenauslagerungsprozess, in den Konsolidierungsspeicher gefördert werden.

Ein Verfahren gemäß Anspruch 11 erhöht die Flexibilität im Sortierverfahren und beim Auslagern der Waren. Insbesondere kann jede einzelne Ware unabhängig von der Reihenfolge der Waren innerhalb einer Förderstufe in die nächste Förderstufe abgegeben werden.

Ein wahlfreier Zugriff bedeutet, dass die Waren beliebig in die jeweilige Förderstufe, also den ersten Umlaufförderer, den Konsolidierungsspeicher und gegebenenfalls dazwischen angeordnete weitere Umlaufförderer, eingelagert und/oder wieder entnommen werden können. Beliebig eingespeichert und/oder beliebig entnommen bedeutet, dass diese Vorgänge unabhängig von der Sortierung der Waren erfolgen, also von der Reihenfolge der Waren im Warenstrom und/oder von Reihenfolge und/oder Sortierung der Waren in der jeweiligen Förderstufe.

Eine Fördervorrichtung gemäß Anspruch 12 weist im Wesentlichen die Vorteile des Förderverfahrens auf, worauf hiermit verwiesen wird. Wesentlich ist, dass zwei hintereinander angeordnete Umlaufspeicher mittels einer Steuerungsvorrichtung derart angesteuert werden können, dass das erfindungsgemäße Förderverfahren ausgeführt werden kann.

Ein zweiter Umlaufförderer gemäß Anspruch 13 dient insbesondere als zusätzliche Förderstufe zwischen dem Konsolidierungsspeicher und dem ersten Umlaufförderer. Der zweite Umlaufförderer vereinfacht insbesondere den Übergang von dem großbauenden Konsolidierungsspeicher mit langer Umlaufzeit auf den vergleichsweise kleinbauenden ersten Umlaufförderer mit kurzer Umlaufzeit. Insbesondere weist der zweite Umlaufförderer eine Baugröße und Umlaufzeit auf, die zwischen den entsprechenden Werten des ersten Umlaufförderers und des Konsolidierungsspeichers liegt.

Eine Fördervorrichtung gemäß Anspruch 14 ermöglicht eine besonders effiziente Förderung und Sortierung der einzelnen Waren.

Eine Fördervorrichtung gemäß Anspruch 15 ermöglicht eine zielgerichtete Konzentrierung des Warenstroms hin zu den Warensenken.

Sowohl die in den Patentansprüchen angegebenen Merkmale als auch die in dem nachfolgenden Ausführungsbeispiel einer erfindungsgemäßen Fördervorrichtung angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine stark schematisierte Darstellung einer erfindungsgemäßen Fördervorrichtung,
- Fig. 2: eine Fig. 1 entsprechende Darstellung der Fördervorrichtung mit einer detaillierteren Ansicht des ersten Umlaufförderers,
- Fig. 3: eine vergrößerte, teilweise freigeschnittene Seitenansicht eines ersten Förderstrangs des ersten Umlaufförderers in Fig. 2.

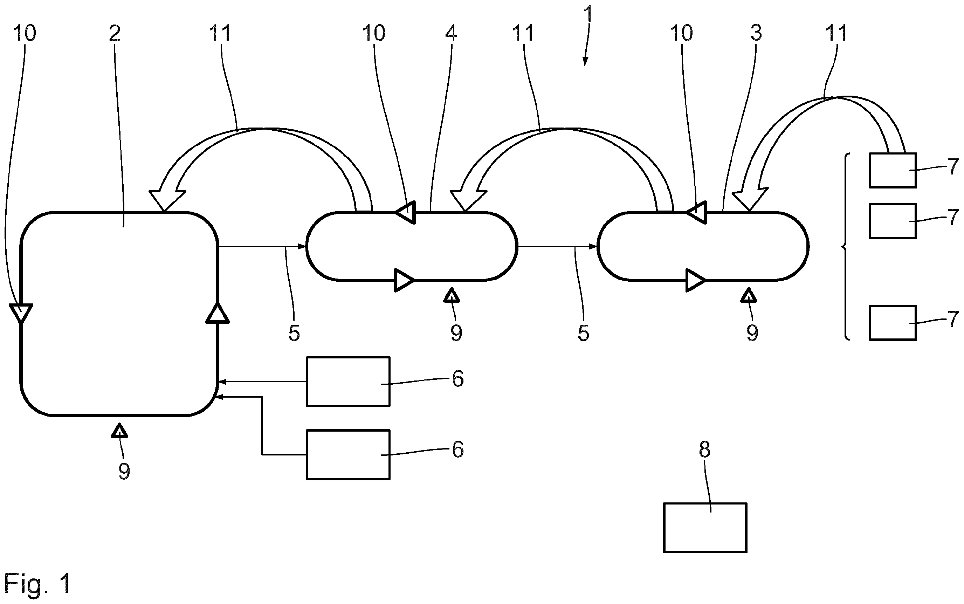

Eine in Fig. 1 insgesamt mit 1 gekennzeichnete Fördervorrichtung umfasst mehrere Förderstufen, nämlich einen Konsolidierungsspeicher 2 als erste Förderstufe und einen ersten Umlaufförderer 3 als letzte Förderstufe. Ferner ist ein zweiter Umlaufförderer 4 zwischen dem Konsolidierungsspeicher 2 und dem ersten Umlaufförderer 3 angeordnet. Der zweite Umlaufförderer 4 ist optional, wobei auch zusätzlich zu dem zweiten Umlaufförderer 4 weitere Förderstufen, die insbesondere als Umlaufspeicher ausgeführt sein können, insbesondere zwischen dem Konsolidierungsspeicher 2 und dem ersten Umlaufförderer 3, angeordnet sein können.

Die Förderstufen 2, 3, 4 sind jeweils mit der nächsthöheren Förderstufe mittels einer Förderstrecke 5 fördertechnisch gekoppelt, um Waren aus einer vorgelagerten Förderstufe in eine nachgelagerte Förderstufe zu fördern.

Die Fördervorrichtung 1 ist eine Hängefördervorrichtung.

Die verschiedenen Förderstufen 2, 3, 4 sind jeweils als endlos umlaufender Förderer ausgeführt. Die verschiedenen Förderstufen 2, 3, 4 weisen jeweils eine Warenaufnahmekapazität auf, die mit steigender Förderstufe abnimmt. Entsprechend gilt dies auch für die jeweilige Umschlagzeit der verschiedenen Förderstufen.

Dem Konsolidierungsspeicher 2 sind mehrere Beladestationen 6 vorgelagert. An den Beladestationen 6 werden Förderbehältnisse mit, insbesondere jeweils genau einer, Ware beladen. Die beladenen Förderbehältnisse werden von den Beladestationen 6 in den Konsolidierungsspeicher 2 gefördert.

Der erste Umlaufförderer 3 und der zweite Umlaufförderer 4 können insbesondere funktional und/oder konstruktiv identisch ausgeführt sein und sich insbesondere allein bezüglich Größe und Kapazität unterscheiden. Es ist auch möglich, dass sich die Umlaufförderer 3, 4 funktional und/oder konstruktiv voneinander unterscheiden. Der erste Umlaufförderer weist insbesondere einen Hauptförderstrang auf mit einer festen Mitnahme. Die feste Mitnahme ermöglicht eine kontrollierte Abgabe einer Auftragsware aus einem Förderbehältnis und/oder des Förderbehältnisses aus dem ersten Umlaufförderer 3. Insbesondere ist der zweite Umlaufförderer 4 als sogenannter Pack-Wall-Buffer ausgeführt. Der Pack-Wall-Buffer ist ein Speicherelement, insbesondere ohne feste Mitnahme. In dem Pack-Wall-Buffer ist eine vergleichsweise dichtere Speicherung und insbesondere eine Nachverdichtung der Waren im Warenstrom, insbesondere an jeder beliebigen Stelle, möglich. Der Pack-Wall-Buffer ist bezüglich seines mechanischen Aufbaus dem Konsolidierungsspeicher ähnlich, aber hinsichtlich Mengengerüst und Geometrie kleiner ausgeführt.

An den ersten Umlaufförderer 3 sind mehrere Warensenken 7 fördertechnisch unmittelbar angeschlossen. Die Warensenken 7 sind insbesondere als Packplätze ausgeführt, an welchen Aufträge gepackt werden.

Die Fördervorrichtung 1 weist eine Steuerungseinheit 8 auf, die in Signalverbindung mit den verschiedenen Förderstufen, also insbesondere mit dem Konsolidierungsspeicher 2, dem ersten Umlaufförderer 3 und dem zweiten Umlaufförderer 4 sowie mit den Beladestationen 6 und den Warensenken 7 in Signalverbindung steht. Die Signalverbindung kann kabelgebunden oder kabellos erfolgen.

Entlang der Fördervorrichtung 1 sind mehrere Leseeinheiten 9 angeordnet, die in Fig. 1 rein symbolisch angedeutet sind. Die Leseeinheiten 9 sind insbesondere innerhalb der jeweiligen Förderstufen 2, 3, 4 und/oder entlang der Förderstrecken 5 angeordnet. Es versteht sich, dass mehr oder weniger als die in Fig. 1 gezeigten Leseeinheiten 9 in der Fördervorrichtung 1 vorhanden sein können. Insbesondere ist die jeweilige Position der Leseeinheiten 9 in der Fördervorrichtung 1, insbesondere entlang der Warenförderrichtung, veränderlich festlegbar. Die Leseeinheiten 9 dienen zum Erkennen der Waren, indem insbesondere jede einzelne Ware, insbesondere jedes einzelne Förderbehältnis, in dem jeweils insbesondere genau eine Ware gefördert wird, gelesen und erkannt wird. Die Leseeinheiten 9 sind jeweils mit der Steuerungseinheit 8 in Signalverbindung. Das Erkennen der Waren ist Voraussetzung für darauf basierende logische Entscheidungen und/oder Aktionen, insbesondere ein gezieltes Ausschleusen der Waren aus einer Förderstufe in die nachfolgende Förderstufe und/oder ein, insbesondere automatisches, Öffnen eines Förderbehältnisses. Die Leseeinheiten 9 sind entsprechend jeweils stromaufwärts einer jeweiligen Ausschleuseeinheit einer Förderstufe 2, 3, 4 angeordnet sein.

Die Waren werden in den umlaufenden Förderern 2, 3, 4 gemäß dem gezeigten Ausführungsbeispiel jeweils im Gegenuhrzeigersinn gefördert. Die jeweilige Warenförderrichtung 10 ist durch Richtungspfeile symbolisiert. Die Warenförderrichtung 10 ist rein symbolisch eingezeichnet. Es versteht sich, dass die Warenförderrichtung auch im Uhrzeigersinn orientiert sein könnte.

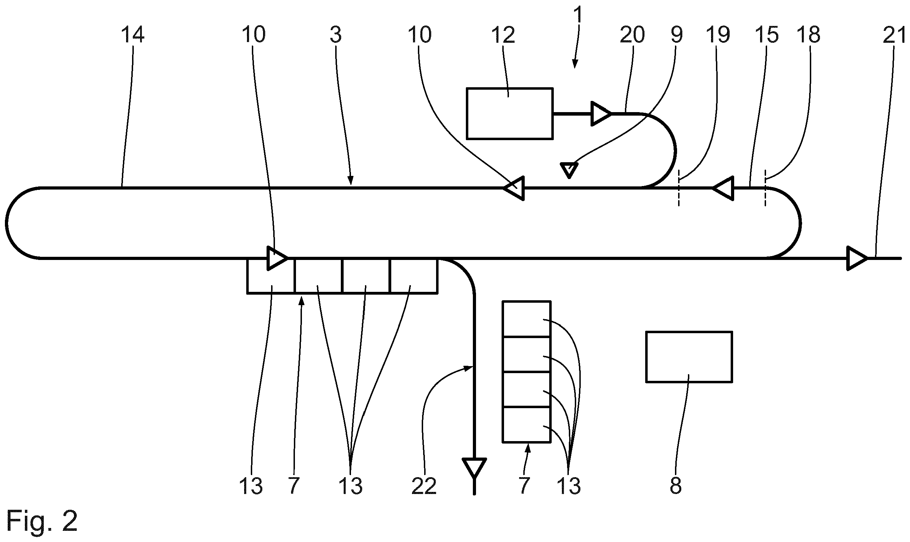

Nachfolgend wird anhand von Fig. 2 der Aufbau und die Funktionsweise des ersten Umlaufförderers 3 näher erläutert.

Fig. 2 zeigt die Fördervorrichtung 1 mit einer Warenquelle 12 und mehreren Warensenken 7. Die Fördervorrichtung 1 kann mehrere Warenquellen 12 umfassen, die insbesondere parallel zueinander angeordnet sind. Jede Warensenke 7 weist insbesondere mehrere Warenabgaben 13 auf, die insbesondere mechanisch voneinander getrennt sind, insbesondere in Form von Trennwänden. Die Warenabgaben 13 an einer Warensenke 7 können auch durch separate Einwurfschächte mit einer insbesondere nach oben geöffneten trichterförmigen Warenaufnahme ausgeführt sein.

Die Warensenken 7 sind insbesondere Packplätze, an welchen Waren eines Auftrags gepackt und insbesondere an einen Warenausgang der Fördervorrichtung 1 für den Versand abgegeben werden können.

Die Warenquelle 12 und die Warensenken 7 sind fördertechnisch mittels des ersten Umlaufförderers 3 fördertechnisch verbunden. Der erste Umlaufförderer 3 weist eine endlos umlaufende Förderstrecke auf und ermöglicht eine umlaufende Förderung entlang der Warenförderrichtung 10, die in Fig. 1 durch einen Pfeil symbolisiert ist und in Gegenuhrzeigerrichtung orientiert ist.

Der erste Umlaufförderer 3 weist einen ersten Förderstrang 14 und einen zweiten Förderstrang 15 auf. An der Warenquelle 12 werden die Waren jeweils in Förderbehältnissen bereitgestellt und mittels der Förderbehältnisse zu den Warensenken 7 gefördert. Die Warensenken 7 sind an die mindestens eine Warenquelle 12 über den ersten Förderstrang 14 insbesondere unmittelbar angeschlossen. Insbesondere ist in jedem Förderbehältnis genau eine Ware angeordnet.

Der erste Förderstrang 14 weist ein nicht näher dargestelltes Förderantriebsmittel auf, das eine feste Förderbehältnis-Mitnahme ermöglicht. Das Förderantriebsmittel umfasst insbesondere einen Antriebsmotor und eine damit mechanisch gekoppelte Antriebskette 16. Die Antriebskette 16 ist insbesondere innerhalb einer Förderschiene 17 des ersten Förderstrangs 14, insbesondere innerhalb eines Führungsprofils, das insbesondere aus Kunststoff hergestellt ist, geführt angeordnet. Insbesondere zwischen dem zweiten Förderstrang 15 und dem ersten Förderstrang 14 angeordnet.

Der erste Förderstrang 14 und der zweite Förderstrang 15 sind an zwei Übergabestellen 18, 19 fördertechnisch miteinander gekoppelt. Die erste Übergabestelle 18 ist in Warenförderrichtung 10 zwischen dem Ende des ersten Förderstrangs 14 und dem Anfang des zweiten Förderstrangs 15 angeordnet. An der ersten Übergabestelle 18 werden die Förderbehältnisse von der festen Förderbehältnis-Mitnahme in dem ersten Förderstrang 14 auf den zweiten Förderstrang 15 ohne feste Förderbehältnis-Mitnahme übergeben. An der zweiten Übergabestelle 19, die in Warenförderrichtung 10 zwischen dem Ende des zweiten Förderstrangs 15 und dem Anfang des ersten Förderstrangs 14 angeordnet ist, werden die Waren von dem zweiten Förderstrang 15 an die feste Förderbehältnis-Mitnahme im ersten Förderstrang 14 aufgegeben.

Die Warenquelle 12 ist über mindestens einen Zuführ-Förderstrang 20 an den ersten Umlaufförderer 3 fördertechnisch angekoppelt, insbesondere stromabwärts des zweiten Förderstrangs 15 und insbesondere stromabwärts des Förderantriebsmittels.

Der zweite Förderstrang 15 ist insbesondere als Staustrecke und insbesondere als Schwerkraftförderer ausgeführt. Besonders unkompliziert ist die Ausführung als Schwerkraftförderer, der insbesondere gegenüber der Horizontalen nach unten geneigt ist. Die Neigung ist insbesondere zu dem ersten Förderstrang 14, insbesondere zu dem Förderantriebsmittel, hin gerichtet. Der zweite Förderstrang 15 weist eine Pufferfunktion auf.

Die Fördervorrichtung 1 umfasst mehrere, insbesondere unterschiedlich ausgeführte, Warensenken 7. Die Warensenken 7 können auch identisch ausgeführt sein. Die Warensenken 7 sind entlang der Warenförderrichtung 10 beabstandet, also hintereinander, angeordnet. Eine erste, in Fig. 2 links dargestellte Warensenke 7 weist eine nicht näher dargestellte Entladeeinheit auf, die ein, insbesondere automatisches, Entladen der Waren aus den Förderbehältnissen ermöglicht. Die erste Warensenke 7 und insbesondere die Abgabefächer 4, sind räumlich benachbart zu dem ersten Förderstrang 14 angeordnet. Die automatische Entladeeinheit kann beispielsweise ein automatisches Öffnen oder Kippen von Fördertaschen und/oder ein automatisches Schwenken oder Kippen von Liegeförderer-Behältern ermöglichen, wobei die Abgabefächer der ersten Warensenken 7 in Abgaberichtung der Waren angeordnet sind. Die erste Warensenke 7 ist also unmittelbar benachbart zu dem ersten Förderstrang 14 angeordnet.

Stromabwärts der Warensenken 7 ist an den ersten Umlaufförderer 3 eine Abführstrecke 21 angeschlossen. Die Abführstrecke 21 dient zum Abführen, insbesondere automatisch, entleerter Förderbehältnisse aus dem ersten Umlaufförderer 3. Die Abführstrecke 21 führt insbesondere zu einer nicht dargestellten Beladestation, an der die Förderbehältnisse mit Waren beladen werden können. Die Abführstrecke 21 kann insbesondere auch mit einem Pufferspeicher verbunden sein, um leere Förderbehältnisse zwischen zu speichern.

Die Abführstrecke 21 kann entfallen, insbesondere wenn ein automatisches Entleeren der Förderbehältnisse mittels einer Entladeeinheit nicht erfolgt.

Eine in Fig. 2 rechts dargestellte zweite Warensenke 7 ist mittels einer Ausschleuseeinheit 22 an den ersten Umlaufförderer 3, insbesondere an den ersten Förderstrang 14, angeschlossen. Die zweite Warensenke 15 kann räumlich beabstandet zu dem ersten Förderstrang 14 angeordnet sein, wobei eine fördertechnische Verbindung zu dem ersten Förderstrang 14 mittels der Ausschleuseeinheit 22 gewährleistet ist. Die Ausschleuseeinheit 22 ist insbesondere identisch zu der Abführstrecke 21 ausgeführt. Die Ausschleuseeinheit 22 ermöglicht ein gezieltes Ausschleusen von Förderbehältnissen aus dem ersten Umlaufförderer 3 in die Ausschleuseeinheit 22. Im Bereich der zweiten Warensenke 7 werden die Förderbehältnisse mittels eines nicht näher dargestellten Stoppers gestoppt und anschließend insbesondere manuell entladen. Es ist denkbar, dass die Ausschleuseeinheit 22 analog der Abführstrecke 21 zu einer Beladestation führt. Es ist auch denkbar, dass die Ausschleuseeinheit 22 mit der Abführstrecke 21 zusammengeführt oder die Ausschleuseeinheit 22 in die Abführstrecke 21 mündet. Insbesondere können mehrere Ausschleuseeinheiten 22 an den ersten Umlaufförderer 3 angeschlossen sein. Vorteilhaft ist es, wenn für jede zweite Warensenke 7 entweder eine Ausschleuseeinheit 22 oder eine Entladeeinheit vorgesehen ist.

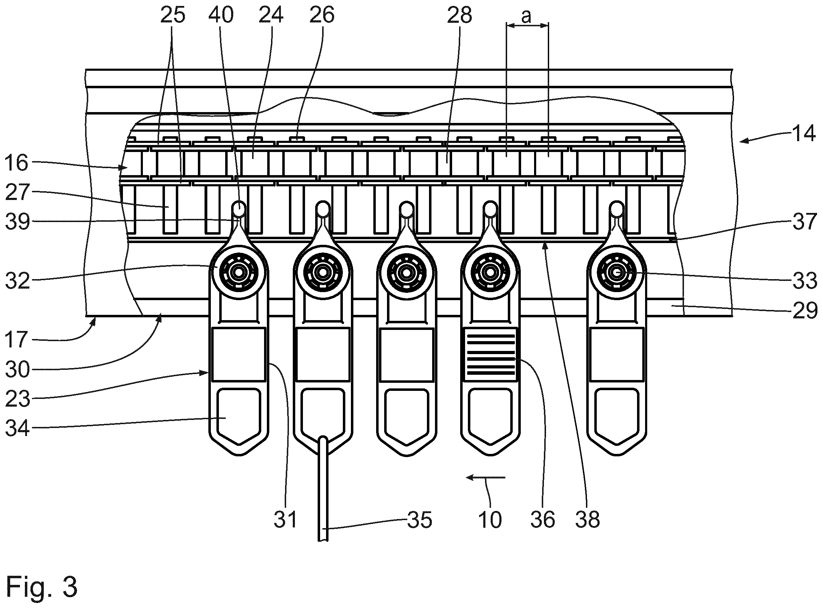

Im Folgenden wird unter Bezugnahme auf Fig. 3 der erste Förderstrang 14 näher erläutert.

Der erste Förderstrang 14 ist als Förderschiene 17 ausgeführt, die auch als Transportschiene bezeichnet wird. Entsprechend ist die Fördervorrichtung 1 ein Hängeförderer. Die Transportschiene 17 ist mittels geeigneter Trageinrichtungen in einem Raum verlegbar. Die Transportschiene 17 ist als Hohlkasten-Profil ausgebildet, in dem die Antriebskette 16 angeordnet ist und mittels des in Fig. 3 rein schematisch nicht dargestellten Antriebs in Warenförderrichtung 10 antreibbar ist.

Mittels der Antriebskette 16 sind Halteelemente 23 entlang der Transportschiene 17 bewegbar. Die Antriebskette 16 und der nicht dargestellte Antrieb bilden ein Förderantriebsmittel für den ersten Förderstrang 14. Der Antrieb ist insbesondere ein elektromotorischer Antrieb, der mittels eines Kraftübertragungselements, insbesondere eines Antriebs-Zahnrades, mechanisch mit der Antriebskette 16, also zur Kraftübertragung, gekoppelt ist.

Die Antriebskette 16 ist eine sogenannte Rollen-Kette mit Rollen 24, die in geringem Abstand voneinander mittels Verbindungslaschen 25 miteinander verbunden sind. Bolzen 26 weisen nach unten vorstehende, als Mitnehmer 27 dienende bolzenförmige Verlängerungen auf. Die Bolzen 26 mit den Mitnehmern 27 verlaufen normal zur Transportschiene 17 in einer durch die Warenförderrichtung 10 aufgespannten Vertikalebene.

Die Antriebskette 16 ist in Richtung der Bolzen 26, also senkrecht und quer zur Warenförderrichtung 10 mittels die Verbindungslaschen 25 untergreifende Führungen 28 in der Transportschiene 17 geführt und gehalten.

Ein Mittenabstand a benachbarter Mitnehmer 27 in der Transportschiene 17 in Warenförderrichtung 10 entspricht exakt der Teilung der Antriebskette 16 und ist insoweit unveränderbar und konstant. Durch die Mitnehmer 27 wird die feste Förderbehältnis-Mitnahme definiert.

An einer Unterseite der Transportschiene 17 sind zwei aufeinander zugerichtete Führungsstege 29 ausgebildet, zwischen denen sich ein in Längsrichtung der Transportschiene 17, also in Warenförderrichtung 10 erstreckender Schlitz 30 ausgebildet ist bzw. begrenzt wird. Durch diesen Schlitz 30 ragt ein flaches Tragteil 31 jedes Halteelements 23 nach unten aus der Transportschiene 17 heraus. In seinem oberen Bereich weist das Halteelement 23 beiderseits des Tragteils 31 je eine Laufrolle 32 auf, die sich jeweils auf einem der beiden Führungsstege 29 abstützt und hierauf in Warenförderrichtung 10 verschiebbar ist. Es ist also nur ein Paar von Laufrollen 32 vorhanden, die um eine gemeinsame Achse 33 drehbar sind, so dass das gesamte Halteelement 23 in der Transportschiene 17 um die Achse 33 pendeln kann.

Das Tragteil 31 weist an seinem unteren Ende eine Aufnahmeöffnung 34 auf, in die ein Förderbehältnis in Form einer Fördertasche 35 einhängbar ist. Die Fördertasche 35 ist in Fig. 2 rein schematisch dargestellt. Das Halteelement 23, das mittels der Laufrollen 32 in der Transportschiene 17 rollen gefördert wird und das mittels der Aufnahmeöffnung 34 zur Aufnahme der Fördertasche 35 geeignet ist, wird auch als Rolladapter bezeichnet.

Das Halteelement 23 weist ein Identifizierungselement 36 auf, das als Transponder, insbesondere RFID-Chip, oder als maschinenlesbarer Code, insbesondere Barcode oder QR-Code, ausgeführt ist. Das Identifizierungselement 36 ist insbesondere zwischen der Aufnahmeöffnung 34 und der Unterseite der Transportschiene 17 angeordnet und damit für ein Lesegerät, insbesondere automatisiert, lesbar. Das Identifizierungselement 36 verläuft entsprechend der Anordnung des plattenartigen Tragteils 31 in Warenförderrichtung 10, liegt also mit seiner Hauptfläche offen quer zur Warenförderrichtung 10, also zur Seite hin.

Die Fördertasche 35 mit einer zu fördernden Ware bleibt nach dem mechanischen Koppeln in das Halteelement 23 während des gesamten Fördervorgangs an diesem Halteelement 23, ist mit diesem also gleichsam "verheiratet". Die zu fördernde Ware wird also gleichsam über das Identifizierungselement 36 und damit das Halteelement 23 gesteuert. Da wiederum der gesamte Transport von der Antriebskette her erfolgt, ist es sehr wichtig, dass ein Halteelement 23 während des Transports eine absolut eindeutige Position relativ zu der Antriebskette 16 einnimmt.

Die Transportschiene 17 weist unmittelbar oberhalb der Laufrollen 32 aufeinander zugerichtete horizontale Begrenzungsstege 37 auf, die zwischen sich einen Schlitz 38 begrenzen. Durch diesen Schlitz 38 erstreckt sich ein stilartiger Ansatz 39 des Halteelements 23, der einstückig mit dem Tragteil 31 an dessen oberen Ende ausgebildet ist.

Am oberen Ende des stilartigen Ansatzes 39 ist ein Anschlag 40 nach Art eines Querriegels ausgebildet ist, dessen Erstreckung horizontal quer zur Warenförderrichtung 10 größer ist als die Breite des Schlitzes 38, so dass bei einem Neigen des Halteelements 23 gegenüber der Transportschiene 17, dieser Anschlag 40 zur Anlage auf den Begrenzungsstegen 37 kommt und somit eine weitere Neigung des Halteelements 23 verhindert. Der Ansatz 39 und der Anschlag 40 haben die Grundform eines Hammers, sind also T-förmig ausgeführt.

Die Mitnehmer 27 der Antriebskette 16 erstrecken sich bis unmittelbar oberhalb der Begrenzungsstege 37, so dass ein zwischen zwei Mitnehmern 27 befindliches Halteelement 23 immer zuverlässig mitgenommen wird, also nicht außer Eingriff mit dem Mitnehmer 27 kommt.

Die Steuerungseinheit 8 steht insbesondere mit der mindestens einen Warenquelle 12, den Warensenken 7, dem ersten Umlaufförderer 3 und/oder den Fördersträngen 14 und 15 in Signalverbindung. Insbesondere steht die Steuerungseinheit 33 mit dem Förderantriebsmittel in Signalverbindung, um ein gezieltes Einschleusen der Fördertaschen 35 von der mindestens einen Warenquelle 12 bzw. ein Rückführen der Fördertaschen 35 aus dem zweiten Förderstrang 15 zu ermöglichen.

Eine Leseeinheit 9 ist insbesondere am Eingang des ersten Umlaufförderers 3 angeordnet, also dort, wo der Zuführförderstrang 10 in den ersten Umlaufförderer 3 mündet. Eine weitere Leseeinheit 9 kann insbesondere am Ausgang des ersten Umlaufförderers 3 angeordnet sein, also dort, wo die Abführstrecke 21 aus dem Umlaufförderer 4 mündet. Die Leseeinheiten 9 dienen zum Lesen der Umlaufförderer 4, so dass unmittelbare Rückschlüsse über die jeweilige Position der Fördertaschen 35 in der Fördervorrichtung 1 und insbesondere innerhalb des ersten Umlaufförderers 3 möglich sind.

Insbesondere steht die Steuerungseinheit 8 mit der Entladeeinheit und/oder mit der Ausschleuseeinheit 22 in Signalverbindung, um ein automatisches Entladen und/oder Ausschleusen der Fördertaschen 35 zu gewährleisten.

Nachfolgend wird ein Förderverfahren für Waren in der Fördervorrichtung 1 näher erläutert. In der Fördervorrichtung 1 werden Waren an den Beladestationen 6 in Förderbehältnisse 35 beladen und an den Konsolidierungsspeicher 2 aufgegeben. Die Waren werden in dem Konsolidierungsspeicher 2 umlaufend gefördert und bei Bedarf ausgeschleust und über die Förderstrecke 5 zunächst an den zweiten Umlaufförderer 4 und bei Bedarf über die weitere Förderstrecke 5 an den ersten Umlaufförderer 3 gefördert. Aus dem ersten Umlaufförderer 3 werden die Waren eines Auftrags als Auftragswaren zu einer der Warensenken 7 gefördert, dort gepackt und für den Versand vorbereitet und insbesondere an einen nicht dargestellten Warenausgang abgegeben.

Wesentlich ist nun, dass entgegen der Förderrichtung 10 der Ware eine Anforderungsrichtung der Waren ausgehend von den Warensenken 7 existiert.

Den Warensenken 7 wird jeweils ein Auftrag mit mindestens einer Ware zugeordnet und dadurch ein Bedarf an Auftragswaren an dieser Warensenke 7 ausgelöst. Dieser Warenbedarf wird als eine Warenbedarfsmeldung von der Warensenke 7 an den ersten Umlaufförderer 3 mittels der Steuerungseinheit 8 ausgelöst. Die Warenbedarfsmeldung 11 ist insbesondere ein steuerungstechnisches Signal, das von der Steuerungseinheit 8 ausgegeben und an den ersten Umlaufförderer 3 übertragen wird. Entsprechend werden weitere Warenbedarfsmeldungen zu der jeweils nächstgelegenen, vorgeschalteten Förderstufe ausgegeben. Die Warenbedarfsmeldungen 11 sind durch die Richtungspfeile in Fig. 1 symbolisiert.

Die verschiedenen Anforderungen können insbesondere mengenbasiert, prioritätenbasiert und/oder kundenbasiert erfolgen.

## Patentansprüche

1. Förderverfahren für Waren umfassend die Verfahrensschritte
- Anfordern eines Auftrags von einer Warensenke (7), wobei der Auftrag mindestens eine Ware umfasst, die eine Auftragsware darstellt,
- Anfordern der mindestens einen Auftragsware aus einem ersten Umlaufförderer (3), an den die Warensenke (7) fördertechnisch unmittelbar angeschlossen ist,
- Anfordern und automatisches Übergeben der mindestens einen Auftragsware aus einem dem ersten Umlaufförderer (3) vorgeschalteten Konsolidierungsspeicher (2), der eine umlaufende Förderstrecke aufweist, in den ersten Umlaufförderer (3),
- Fördern und Abgeben der mindestens einen angeforderten Auftragsware an die Warensenke (7).

2. Förderverfahren gemäß Anspruch 1, **dadurch gekennzeichnet, dass** die Waren in Förderbehältnissen (35), insbesondere vereinzelt, gefördert werden.

3. Förderverfahren gemäß Anspruch 2, **dadurch gekennzeichnet, dass** das Abgeben der Auftragswaren ein, insbesondere automatisches, Entladen der Auftragswaren aus den Förderbehältnissen (35) mittels einer Entladeeinheit und/oder ein Ausschleusen von Förderbehältnissen (35) aus dem ersten Umlaufförderer (3) mittels einer Ausschleuseeinheit (22) umfasst.

4. Förderverfahren gemäß einem der vorstehenden Ansprüche, **dadurch gekennzeichnet, dass** das Anfordern der mindestens einen Auftragsware auf Basis der Kriterien Auftragsmenge, Kunde des Auftrags und/oder Auftragspriorität erfolgt, wobei insbesondere die Anforderungskriterien für unterschiedliche Förderstufen variieren können.

5. Förderverfahren gemäß einem der vorstehenden Ansprüche, **dadurch gekennzeichnet, dass** die mindestens eine Auftragsware aus einem dem Konsolidierungsspeicher (2) nachgeschalteten zweiten Umlaufförderer (4) angefordert wird, insbesondere bevor sie aus dem Konsolidierungsspeicher (2) angefordert wird.

6. Förderverfahren gemäß einem der vorstehenden Ansprüche, **gekennzeichnet durch** ein Sammeln von Auftragswaren eines Auftrags in einer Förderstufe (2, 3, 4), insbesondere im Konsolidierungsspeicher (2), bis dieser Auftrag vollständig ist.

7. Förderverfahren gemäß einem der vorstehenden Ansprüche, **gekennzeichnet durch** Verändern der Auftragsreihenfolge beim Anfordern der Waren.

8. Förderverfahren gemäß einem der vorstehenden Ansprüche, **dadurch gekennzeichnet, dass** die Förderung der mindestens einen Auftragsware in die nächste Förderstufe, insbesondere in den ersten Umlaufförderer (3), auftragsorientiert erfolgt.

9. Förderverfahren gemäß Anspruch 8, **dadurch gekennzeichnet, dass** die mindestens einen Auftragsware nur dann in die nächste Förderstufe gefördert wird, wenn sämtliche Auftragswaren dieses Auftrags in der vorherigen Förderstufe, insbesondere in dem Konsolidierungsspeicher (2), angeordnet sind.

10. Förderverfahren gemäß einem der vorstehenden Ansprüche, **gekennzeichnet durch** ein Befüllen des Konsolidierungsspeichers (3) mit Waren von mindestens einer Beladestation (6).

11. Förderverfahren gemäß einem der vorstehenden Ansprüche, **gekennzeichnet durch** wahlfreien Zugriff auf alle Waren, insbesondere in dem ersten Umlaufförderer (3), in dem zweiten Umlaufförderer (4) und/oder in dem Konsolidierungsspeicher (2) und insbesondere in jeder Förderstufe.

12. Fördervorrichtung für Waren umfassend
a. einen Konsolidierungsspeicher (2), der eine umlaufende Förderstrecke aufweist,
b. einen ersten Umlaufförderer (3), der stromabwärts des Konsolidierungsspeichers (2) angeordnet ist,
c. mindestens eine Warensenke (7), die fördertechnisch unmittelbar an den ersten Umlaufförderer (3) angeschlossen ist,
d. eine Steuerungseinheit (8), die dazu ausgebildet ist, ein Förderverfahren gemäß einem der vorstehenden Ansprüche auszuführen.

13. Fördervorrichtung gemäß Anspruch 12, **gekennzeichnet durch** einen zweiten Umlaufförderer (4), der zwischen dem Konsolidierungsspeicher (2) und dem ersten Umlaufförderer (3) angeordnet ist.

14. Fördervorrichtung gemäß Anspruch 12 oder 13, **dadurch gekennzeichnet, dass** die Fördervorrichtung (1) eine Hängefördervorrichtung ist, die insbesondere eine Förderschiene (17) und darin geförderte Mitnehmer (23) aufweist, die jeweils mit einem Förderbehältnis (35) koppelbar sind.

15. Fördervorrichtung gemäß einem der vorstehenden Ansprüche,
**dadurch gekennzeichnet, dass** die Aufnahmekapazität des ersten Umlaufförderers (3) und des Konsolidierungsspeichers (2) und insbesondere des zweiten Umlaufförderers (4) mit Zunahme der Förderstufe abnimmt.
